# EUROPÄISCHE PATENTSCHRIFT

(11) **EP 2 288 643 B1**
(45) Veröffentlichungstag und Bekanntmachung des Hinweises auf die Patenterteilung: **30.10.2013**
(21) Anmeldenummer: 09761408.5
(22) Anmeldetag: 02.06.2009
(51) Int. Cl.: C08J 3/22, C08J 9/00, C08K 5/092

(54) **GESCHÄUMTE POLYESTER UND VERFAHREN ZU DEREN HERSTELLUNG**
FOAMED POLYESTERS AND METHODS FOR THEIR PRODUCTION
POLYESTERS EXPANSÉS ET LEUR PROCÉDÉ DE FABRICATION

(30) Priorität: 12.06.2008 CH 892082008; 11.12.2008 CH 19432008
(43) Veröffentlichungstag der Anmeldung: 02.03.2011
(73) Patentinhaber: 3A Technology & Management Ltd., 8212 Neuhausen am Rheinfall (CH)
(72) Erfinder: RÜGER, Heinrich, CH-5644 Auw (CH); GISLER, Michael, CH-Cham (CH); VILLIGER, Linus, CH-5643 Sins (CH); MÜNGER, Cédric, CH-5703 Seon (CH)
(74) Vertreter: Gernet, Samuel Andreas
(86) Internationale Anmeldenummer: PCT/EP2009/003911
(87) Internationale Veröffentlichungsnummer: WO 2009/149845

(56) Entgegenhaltungen:
- WO-A1-93/12164
- WO-A1-96/40821
- DE-A1- 10 000 712

## Beschreibung

Die Erfindung betrifft Schaumkörper aus thermoplastischen Polyestern, mit hoher Homogenität, niedriger Offenzelligkeit und hoher Schubbruchdehnung, enthaltend als Modifizierungsmittel Dianhydride von Tetracarbonsäuren, Mittel zur Herstellung der Schaumkörper und Verfahren zur Herstellung von geschäumten Polyestern.

Es sind beispielsweise aus der WO 93/12164 geschäumte zelluläre Polyester und ein Verfahren zu deren Herstellung bekannt. Es wird beschrieben, dass thermoplastische Polyester, die sich für das Extrusionsschäumen eignen, beispielsweise eine Grenzviskosität (intrinsic viscosity) von mehr als 0,8 dl/g aufweisen. Um den angegebenen Wert der Grenzviskosität zu erhalten, wird ein zweistufiges Verfahren beschrieben, demgemäss ein Polyester mit einer Grenzviskosität von höher als 0,52 dl/g mit einem Dianhydrid einer organischen Tetracarbonsäure versetzt und zur Reaktion gebracht wird, um einen Polyester mit einer Grenzviskosität von 0,85 bis 1.95 dl/g zu erhalten. Mit dem derart aufbereiteten Polyester kann danach der Schäumungsvorgang durch Extrusionsschäumen eingeleitet werden. Fallweise kann während des Extrusionsschäumens weiteres Dianhydrid einer organischen Tetracarbonsäure zugegeben werden.

Nachteil des genannten Verfahrens ist, dass zwei aufwändige Prozessschritte notwendig sind, um zunächst das ganze Volumen an Polyester mit dem Dianhydrid der Tetracarbonsäure zu vermischen, und es dann in einem Festphasenreaktor auf Reaktionstemperatur zu bringen und bis zum Ende der Reaktion mehrere Stunden auf Temperatur zu halten. Danach erst schliesst sich der eigentliche Schäumungsvorgang an.

Gemäss der US 5,288,764 kann geschäumtes Polyester durch Bilden einer geschmolzenen Mischung und Extrudieren dieser Mischung erhalten werden. Die Mischung wird aus einem Hauptanteil Polyester und einem kleineren Teil einer Mischung aus Polyester mit einer Substanz gebildet, die eine Kettenverlängerung, resp. -Verzweigung, bewirkt. Aus DE 100 00 712 ist ein Verfahren zur Herstellung von geschäumten Polyestern bekannt, enthaltend elastomere Polymere.

Der Erfindung liegt die Aufgabe zugrunde, Schäume aus Polyester, Mittel zu deren Herstellung und ein Verfahren zu deren Herstellung vorzuschlagen, um auf einfache Weise zu Schäumen, resp. Schaumkörpern, aus thermoplastischen Polyestern mit vorteilhaften Eigenschaften zu gelangen. Besonders gesuchte Schäume aus Polyester weisen beispielsweise bei niedriger Dichte, eine hohe Homogenität, eine niedrige Offenzelligkeit, eine hohe Festigkeit und Insbesondere eine hohe Schubbruchdehnung auf. Das Schäumen von Polyestern zu Schaumkörpern ist ein nur schwer beherrschbarer Prozess. Insbesondere Polyester mit niedriger Grenzviskosität (Intrinsic Viscosity, IV), lassen sich entweder gar nicht schäumen oder falls ein Schäumen dennoch möglich ist, so welsen die Schäume schlechte Elgenschaften auf, wie verlierende hohe Dichte, hohe Offenzeiligkelt, unregelmässige Porenverteilung und geringe Schubbruchdehnung.

Zur erfindungsgemässen Lösung der Aufgabe führt, ein Polyesterschaum des Schaumkörpers nach Anspruch 1.

Beispielsweise enthalten erfindungsgemässe Schaumkörper aus Polyestern thermoplastische Elastomere in Mengen von 0,5 bis 15,0 Gew.-%, bezogen auf das Gewicht des Schaumkörpers. Zweckmässig sind Mengen an thermoplastischen Elastomere von 0,5 bis 12 Gew.-%, und bevorzugt von 1,5 bis 12 Gew.-%, jeweils bezogen auf das Gewicht des Schaumkörpers.

Die Schaumkörper aus Polyestern nach vorliegender Erfindung enthalten als thermoplastische Elastomere vorteilhaft Polymer-Blends oder thermoplastische Copolyesterelastomere.

Thermoplastische Elastomere bestehen aus oder enthalten Polymere oder eine Polymermischung (Blend), die bei Gebrauchstemperatur Eigenschaften aufweisen, die denen von vulkanisiertem Kautschuk ähnlich sind, die sich jedoch bei erhöhten Temperaturen wie ein thermoplastischer Kunststoff verarbeiten und aufarbeiten lassen. Die Polymer-Blends weisen eine Polymermatrix aus hartem Thermoplast mit darin eingelagerten Partikeln aus weichen vernetzten oder unvernetzten Elastomeren auf. Die thermoplastischen Copolyesterelastomere enthalten harte thermoplastische Sequenzen und weiche elastomere Sequenzen. Die thermoplastischen Copolyesterelastomere enthalten Polyesterblöcke, zweckmässig aus einem Diol, vorzugsweise aus 1,4-Butandiol oder 1,2-Ethandiol, und einer Dicarbonsäure, vorzugsweise Terephthalsäure, die mit Polyethern, die Hydroxyl-Endgruppen tragen, in einer Kondensationsreaktion verestert wurden.

Thermoplastische Elastomere (beispielsweise nach prEN ISO 18064) sind auch unter dem Kürzel TPE und den Untergruppen TPO (thermoplastische Olefinelastomere), TPS (thermoplastische Styrenelastomere), TPV (thermoplastische Kautschukvulkanisate), TPU (thermoplastische Urethanelastomere), TPA (thermoplastische Polyamidelastomere), TPC (thermoplastische Copolyesterelastomere) und TPZ (sonstige, nicht klassierte thermoplastische Elastomere) bekannt. Zu den TPE gehören Blockpolymere oder Segmentpolymere, wie beispielsweise thermoplastische Styrolblockpolymere, thermoplastische Copolyester, Polyetherester, thermoplastische Polyurethane oder Polyether-Polyamid-Blockcopolymere. Die TPE erhalten ihre elastomeren Eigenschaften entweder durch Copolymerisieren von harten und weichen Blöcken oder durch Blenden einer thermoplastischen Matrix. Im Falle von Propfcopolymerisation bilden die Hartsegmente sogenannte Domänen, die als physikalische Vernetzungsstellen fungieren. TPE sind wiederholt aufschmelz- und verarbeitbar. Die TPE, beschrieben als thermoplastische Copolyesterelastomere, resp. auch TPC genannt, sind unterteilt in die TPC-EE mit weichen Segmenten mit Ether- und Esterverknüpfungen und die TPC-ES/-ET mit weichen Polyestersegmenten, resp. Polyethersegmenten. Vorliegend sind die TPC-EE von besonderem Interesse.

Die thermoplastischen Copolyesterelastomere, resp. thermoplastischen Copolyester oder thermoplastischen Polyetherester, resp. elastomere Copoyetherester sind alternierend aus harten Polyestersegmenten und weichen Polyethersegmenten aufgebaut. Je nach Art und Länge der harten und weichen Segmente ist ein breiter Härtebereich einstellbar. Thermoplastische Copolyester sind Blockcopolymere bestehend einerseits aus amorphen Weichsegmenten aus Polyalkylenetherdiolen und/oder langkettigen aliphatischen Dicarbonsäureestern und andererseits aus Hartsegmenten aus kristallinem Polybutylenterephthalat. Die Herstellung der elastomeren Copolyetherester erfolgt in der Schmelze durch Umesterungsreaktionen zwischen einem Terephthalatester, einem Polyalkylenetherglycol (z.B. Polytetramethylenetherglycol, Polyethylenoxidglycol oder Polypropylenoxidglycol) und einem kurzkettigen Diol, beispielsweise 1,4-Butandiol oder 1,2-Ethandiol.

Um bei Polyestern das Molekulargewicht zu erhöhen, kann dem Polyester ein Modifizierungsmittel beigegeben werden. Das Modifizierungsmittel ist beispielsweise ein Dianhydrid einer organischen Tetracarbonsäure (Tetracarbonsäuredianhydrid). Bevorzugte Dianhydride sind die Dianhydride folgender Tetracarbonsäuren:
Benzol-1,2,4,5-Tetracarbonsäure (Pyromellitsäure),
3,3',4,4'-Diphenyltetracarbonsäure,
3,3',4,4'-Benzophenontetracarbonsäure,
2,2-Bis-(3,4-dicarboxyphenyl)-propan,
Bis-(3,4-dicarboxyphenyl)-ether,
Bis-(3,4-dicarboxylphenyl)-thioether,
Naphthalin-2,3,6,7-tetracarbonsäure,
Bis-(3,4-dicarboxylphenyl)-sulfon,
Tetrahydrofuran-2,3,4,5-tetracarbonsäure,
2,2-Bis-(3,4-dicarboxlphenyl) hexafluoropropan,
1,2,5,6 -Naphthalintetracarbonsäure,
Bis-(3,4-dicarboxyphenyl)-sulfoxid
und Mischungen davon.

Das bevorzugte Dianhydrid ist das Pyromellitsäuredianhydrid (Benzol-1,2,4,5-tetracarbonsäure-1,2:4,5-dianhydrid).

Zur Erzeugung von geschäumten Polyestern anwendbare Ausgangsmaterialien sind Polyester, wie thermoplastische Polyester, die durch Polykondensation von aromatischen Dicarbonsäuren mit Diolen erhältlich sind. Beispiele von aromatischen Säuren sind Terephthal- und Isophthalsäuren, Naphthalindicarbonsäuren und Diphenyletherdicarbonsäuren. Beispiele von Diolen sind Glykole wie Ethylenglykol, Tetraethylenglykol, Cyclohexandimethanol, 1,4-Butandiol und 1,2-Ethandiol.

Polyester aus oder enthaltend Polyethylenterephthalat, Polybutylenterephthalat sowie Polyethylenterephthalat-Copolymere enthaltend bis zu 20 % Einheiten Isophthalsäure, sind bevorzugt.

Ein besonders wichtiges Merkmal der als Ausgangsmaterial eingesetzten Polyester, die erfindungsgemäss modifiziert und zu den erfindungsgemässen Schaumkörpern geschäumt werden, ist die Grenzviskosität. Es war bis anhin nicht möglich, ausgehend von Polyestern mit einer Grenzviskosität von etwa 0,4 dl/g Schäume herzustellen. Nach vorliegender Erfindung können aus Ausgangsmaterialien, wie aus Polyestern mit einer Grenzviskosität bereits ab Werten von etwa 0,4 dl/g und darüber und insbesondere aus Polyestern mit einer Grenzviskosität von z.B. 0,6 bis 0,7 dl/g und darüber, zuverlässig Schäume mit den geforderten Eigenschaften gefertigt werden. Um tiefe Grenzviskositäten zu erhöhen, muss der Anteil an Modifizierungsmittel, insbesondere des Tetracarbonsäuredianhydrids, bezogen auf den eingesetzten Polyester, entsprechend erhöht werden. Durch die Wahl der Konzentration des Modifizierungsmittels in der Vormischung und die Menge eingesetzter Vormischung bezüglich der Menge Polyester, lässt sich die Grenzviskosität des verarbeiteten Polyesters-und damit dessen Schäumbarkeit - leicht kontrollieren. Beispielsweise kann die Grenzviskosität von 0,6 bis 0,7 dl/g durch die Modifizierung auf über 1,0 oder auch 1,2 dl/g und darüber erhöht werden.

Vorliegende Erfindung betrifft auch Mittel zur Erzeugung von Schaumkörpern aus Polyestern hoher Homogenität, niedriger Offenzelligkeit und hoher Schubbruchdehnung, enthaltend als Modifizierungsmittel Dianhydride von Tetracarbonsäuren. Die Mittel stellen eine Vermischung dar, enthaltend thermoplasti-sche Elastomere gemäss Anspruch 10, insbesondere thermoplastische Copolyesterelastomere, in Mengen von 25 bis 95 Gew.-%, bezogen auf das Gewicht des Mittels, und Dienhydride von Tetracarbonsäuren in Mengen von 5 bis 30 Gew.-%, bezogen auf das Gewicht des Mittels.

Bevorzugt sind Mittel zur Erzeugung von Schaumkörper aus Polyestern, wobei das Mittel eine Vormischung darstellt, enthaltend thermoplastische Copolyesterelastomere In Mengen von 25 bis 95 Gew.-% und Dianhydride einer Tetracarbonsäure in Mengen von 5 bis 30 Gew-% sowie 0 bis 70%. vorzugsweise 1 bis 50 Gew.%, jeweils bezogen auf das Gewicht des Mittels, Stabilisatoren, Nukleierungsmittel, Flammschutzmittel und/oder Polyester, zweckmässig ein Polyester der gleichen Qualität, wie ein zu modifizierender Ausgangspolyester.

Das Mittel, d.h. die Vormischung kann vorgefertigt und fallweise zwischengelagert werden. Danach können, in den vorgesehenen Mengen, die Vormischung und die zu schäumenden Polyester zusammengemischt werden. Diese Mischung aus Vormischung und Polyestern kann weiter dem Schäumprozess zugeführt und zu den Schaumkörpem verarbeitet werden.

Vorliegende Erfindung betrifft auch ein Verfahren zur Herstellung von Schaumkörpem aus Polyestern hoher Homogenität und Schubbruchdehnung, enthaltend als Modifizierungsmittel Dianhydride einer Tetracarbonsäure.

Nach dem erfindungsgemässen Verfahren zur Herstellung der Schaumkörpern wird ein Polyesterharz mit einer Vormischung aus thermoplastischen Elastomeren gemäss Anspruch 8, insbesondere thermoplastische Copolyesterelastomeren, und Dianhydriden einer Tetracarbonsäure versetzt und zu einem Schaumkörper, enthaltend die thermoplastischen Copolyesterelastomere in Mengen von 0,5 bis 15 Gew.-%, bezogen auf das Gewicht des Schaumkörpers, aufgeschäumt.

Die Vormischung aus thermoplastische Elastomere, wie thermoplastischen Copolyesterelastomeren, und Dianhydriden einer Tetracarbonsäure wird als Vorprodukt durch Mischen der Bestandteile hergestellt. Die Vormischung kann 25 bis 95 Gew.-%, bezogen auf die Vormischung, Copolyesterelastomere und 5 bis 30 Gew-%, bezogen auf die Vormischung, Tetracarbonsäuredianhydrid enthalten. Zweckmässig enthält die Vormischung 50 bis 90 Gew.-%, vorteilhaft 80 bis 90 Gew.-%, bezogen auf die Vormischung, Copolyesterelastomere und 10 bis 25 Gew-%, vorteilhaft 10 bis 15 Gew.-%, bezogen auf die Vormischung, Tetracarbonsäuredianhydrid.

Die Vormischung kann als weitere Bestandteile, beispielsweise insgesamt 0 bis 70%, vorzugsweise 0,1 bis 70 Gew.-% und insbesondere 1 bis 50 Gew.-%, beispielsweise Polyester, Stabilisatoren, Nukleierungsmittel, Füllstoffe und Flammschutzmittel enthalten. Die zu den weiteren Bestandteilen angeführten Polyester können von der gleichen Qualität, wie die zu modifizierenden Polyester, d.h. Ausgangspolyester, z.B. mit einer Grenzviskosität ab etwa 0,4 dl/g und insbesondere Polyester mit einer Grenzviskosität von ca. 0,6 bis 0,7 dl/g und darüber, sein.

Die Bereitstellung der Vormischung kann durch Zuführen der Bestanteile in einen Mischer, beispielsweise einen Schneckenextruder, wie einen Ein- oder Doppelschneckenextruder oder einen Mehrwellenextruder etc., und einer innigen Vermischung der Bestandteile über eine Zeitraum von 10 bis 120 Sekunden bei Temperaturen von 200 bis 260°C erfolgen. Die Vormischung kann aus dem Mischer ausgebracht und in eine weiter verarbeitbare Form, z.B. granuliert, werden.

Zur Herstellung der Schaumkörper aus Polyestern erfolgt durch einen Mischund Schäumprozess. Dazu wird beispielsweise ein Polyester mit einer - Grenzviskosität von wenigstens 0,4 dl/g, vorgelegt und mit der Vormischung versetzt. Die Vormischung kann in Mengen von 1,0 bis 20,0 Gew.-%, bezogen auf den Polyester, eingesetzt werden. Vorteilhaft sind Mengen von 2,0 bis 4,0 Gew.-%, bezogen auf den Polyester.

Fallweise können zusätzlich zum Polyester und der Vormischung weitere Komponenten dem Misch- und Schäumprozess, zugeführt werden. Es sind dies die bereits erwähnten Stabilisatoren, Füllstoffe und Flammschutzmittel, die anstelle oder soweit nicht schon in der Vormischung enthalten, zugeführt werden können. Die Mengen weiterer Komponenten sind beispielsweise bis zu 15 Gew.-%, zweckmässig 0,1 bis 15 Gew.-%, bezogen auf die Summe von Polyester und Vormischung. Weitere Komponenten, beispielsweise zur Steuerung der Zellgrösse und der Zellverteilung im Schaum, können ebenfalls dem Misch- und Schäumprozess zugeführt werden. Es sind dies beispielsweise bis zu 5 Gew.-%, zweckmässig 0,1 bis 5 Gew.-%, (bezogen auf die Summe von Polyester und Vormischung) an Metallverbindungen der I. bis III. Gruppe im periodischen System, wie z.B. Natriumcarbonat, Calciumcarbonat, Aluminium- oder Magnesiumstearat, Aluminium- oder Magnesiummyrisat oder Natriumterephtalat und die weiteren geeigneten Verbindungen, wie z.B. Talkum oder Titandioxid.

Die Komponenten können einem Reaktor oder Mischer, beispielsweise einem Ein- oder Doppelschneckenextruder oder einem Mehrwellenextruder oder einer Tandemanlage aus zwei miteinander kombinierten Einschneckenextrudern oder aus, miteinander kombiniert, einem Doppel- und einem Einschneckenextruder zugeführt und vermischt werden. Die Verweilzeit der Komponenten im Reaktor oder Mischer kann beispielsweise von 8 bis 40 Minuten betragen. Die Temperatur während der Verweilzeit kann von 240 bis 320°C betragen.

Dem Reaktor oder Mischer, z.B. den genannten Extrudern, wird auch das Treibmittel zum Aufschäumen zugeführt. Geeignete Treibmittel sind beispielsweise leicht verdampfbare Flüssigkeiten, thermisch zersetzende Stoffe, die Gase freisetzen oder Inertgase sowie Mischungen oder Kombinationen genannter Mittel. Zu den leicht verdampfbaren Flüssigkeiten gehören gesättigte aliphatische oder cycloaliphatische Kohlenwasserstoffe, aromatische Kohlenwasserstoffe und halogenierte Kohlenwasserstoffe. Beispiele sind Butan, Pentan, Hexan, Cyclohexan, Ethanol, Aceton und HFC 152a. Als inertes Gas kann CO₂ und Stickstoff genannt werden. Das Treibmittel wird in der Regel nach dem Zuführungsbereich die Komponenten in den Extruder eingespeist.

An der formgebenden Auslassöffnung des Extruders entsteht kontinuierlich der Schaumkörper aus im wesentlichen weitestgehend geschlossenzelligem Schaum, der beispielsweise einen runden, gerundeten, rechteckigen oder polygonalen Querschnitt aufweisen kann. Der Schaumkörper kann danach soweit gefordert, nach Massgabe des Einsatzes, verformt, geschnitten und/oder gefügt werden. Werden Schaumkörper erzeugt, so können die Schaumkörper nebeneinander und/oder übereinander gestapelt werden und unter gegenseitiger trennfester Verbindung, wie gegenseitiges verkleben oder insbesondere verschweissen, zu Schaumstoffblöcken, insbesondere homogenen Schaumstoffblöcken, verarbeitet werden. Die Schaumkörper können plattenförmig sein und gestapelt werden. Die sich berührenden Flächen können vollflächig miteinander verbunden, wie verschweisst, werden. Dadurch entstehen Schaumstoffblöcke mit Schweissnähten, die in Extrusionsrichtung laufen. Es können, insbesondere quer zur Extrusionsrichtung, resp. quer zu den Schweissnähten, vom Schaumstoffblock einzelne Schaumstoffplatten abgetrennt werden.

Der erfindungsgemässe Schaumkörper weist insbesondere folgende vorteilhaften Merkmale auf:
- Sortenreinheit, es sind nur Polyester und keine weiteren artfremden Polymere vorhanden.
- Regelmässige geschlossenzellige Poren.

Der erfindungsgemässe Schaumkörper weist bei einer Rohdichte von etwa 120 kg/m³ insbesondere folgende vorteilhaften Merkmale auf:
- Schubfestigkeit nach ISO 1922 , beispielsweise von grösser als 1.0 N/mm²,
- Schubmodul (G-Modul) nach ASTM C393, beispielsweise von grösser als 20 N/mm².
- Schubbruchdehnung nach ISO 1922 , beispielsweise mit Werten von mehr als 12 %, zweckmässig von mehr als 16 % und bevorzugt von mehr als 50 %.
- Druckfestigkeit nach ISO 844 ,beispielsweise von grösser als 1.7 N/mm²
- Druckmodul (E-Modul) nach DIN 53421, beispielsweise von grösser als 90 N/mm²_{.}
- Offenzelligkeit nach Airex-Methode AM-19 in Anlehnung an ASTM D1056 - 07 beispielsweise von kleiner als 8% und insbesondere kleiner als 4%. Die Offenzelligkeitsmessung gemäss der Airex-Methode AM-19 wird wie in ASTM D 1056 beschrieben durchgeführt, jedoch mit einer anderen Formel berechnet: ASTM D 1059: W = [(A-B)/B] x 100 mit W = change in mass [%]; A = final mass of specimen; und B = initial mass of specimen.
   Airex AM-19: OZ = [(A-B)/(LxBxD)] x 100 mit OZ = Offenzelligkeit [Vol-%] A = Gewicht der Probe nach Konditionierung [g]; B = Gewicht der Probe vor Konditionierung [g]; L, B, D = Länge, Breite, Dicke der Probe [cm]; die Dichte des Wassers mit 1 g/cm³ ist in der Formel nicht explizit ausgewiesen. Nach vorliegender Erfindung werden beispielsweise Werte im Wasser-Adsorptions-Test (water adsorption test) von unter 40 Gew.-%, zweckmässig von unter 35 Gew.-% und insbesondere von unter 30 Gew.-% erreicht.
- Die Viskositätszahl des resultierenden Schaums wird nach ISO 1628/5 bestimmt und kann beispielsweise mehr als 150 ml/g, etwa entsprechend einer Grenzviskosität von mehr als 1,2 dl/g, betragen. Bevorzugt ist eine Viskositätszahl des resultierenden Schaums, bestimmt nach ISO 1628/5, von beispielsweise mehr als 160 ml/g, etwa entsprechend einer Grenzviskosität von mehr als 1,30 dl/g.

Das Verfahren nach der Erfindung zeichnet sich beispielsweise auch dadurch aus, dass beim Extrudieren keine Gel-Bildung stattfindet. Die Vormischung ist vollständig mit dem Polyester mischbar und es bildet sich keine zweite unerwünschte Phase. Die Vormischung lässt sich in an sich bekannten Vorrichtungen, den sog. Compoundiervorrichtungen,herstellen, wobei der Prozess leicht beherrschbar ist. Die Eigenschaften des entstehenden Schaumkörpers lassen sich auch durch die Wahl des thermoplastischen Copolyesterelastomeren (TPC) und der darin enthaltenen weichen Elastomeren und harten thermoplastischen Sequenzen auf einfache Weise steuern.

### Beispiele:

### Vormischung Beispiel 1:

Thermoplastisches Copolyesterelastomer (TPC) in Form von Granulat mit einer Shorehärte von 55 D wird während 4 Std. bei 100 °C mittels heisser Luft getrocknet. Auf einem gleichdrehenden Doppelschneckenextruder mit 27 mm-Zylinderdurchmesser und einem L/D-Verhältnis von 40 werden 85 Gew.-% TPC und 15 Gew.-% Pyromellitsäuredianhydrid (PMDA) bei einer Zylindertemperatur zwischen 200 und 210 °C und einer Drehzahl von 200 UpM unter Schutzgasatmosphäre gemischt und in Strangform ausgetragen. Die Stränge werden nach Abkühlung im Wasserbad und Trocknung mit einem Luftgebläse in einer Granuliervorrichtung mittels rotierender Messer in ein zylindrisches Granulat überführt. Die so erhaltene Vormischung wird während 3 Stunden bei 70 °C nachgetrocknet.

### Vormischung Beispiel 2:

Thermoplastisches Copolyesterelastomer (TPC) in Form von Granulat mit einer Shorehärte von 33 D wird während 4 Std. bei 100 °C mittels heisser Luft getrocknet. Auf einem gleichdrehenden Doppelschneckenextruder mit 27 mm-Zylinderdurchmesser und einem L/D-Verhältnis von 40 werden 85 Gew.-% TPC und 15 Gew.-% Pyromellitsäuredianhydrid (PMDA) bei einer Zylindertemperatur zwischen 200 und 210 °C und einer Drehzahl von 200 UpM unter Schutzgasatmosphäre gemischt und in Strangform ausgetragen. Die Stränge werden nach Abkühlung im Wasserbad und Trocknung mit einem Luftgebläse in einem Granuliervorrichtung mittels rotierender Messer in ein zylindrisches Granulat überführt. Die so erhaltene Vormischung wird während 3 Stunden bei 70 °C nachgetrocknet.

### Vormischung Vergleichsbeispiel:

Polyestergranulat (PET)mit einer Grenzviskosität von 0,81 dl/g wird während 8 Std. bei 150 °C mittels heisser Luft getrocknet. Auf der gleichen Anlage wie in Beispiel 1 werden 85 Gew.-% PET-Granulat und 15 Gew.-% Pyromellitsäuredianhydrid (PMDA) bei einer Zylindertemperatur zwischen 240 und 250 °C und einer Drehzahl von 200 UpM unter Schutzgasatmosphäre gemischt und in Strangform ausgetragen. Die Stränge werden nach Abkühlung im Wasserbad und Trocknung mit einem Luftgebläse in einem Granuliervorrichtung mittels rotierender Messer in ein zylindrisches Granulat überführt. Die so erhaltene Vormischung wird während 3 Stunden bei 70 °C nachgetrocknet.

**Tabelle 1**

| Versuchsparameter zur Herstellung der Vormischungen | | | | |
|---|---|---|---|---|
| Vormischung | | Beispiel 1 | Beispiel 2 | Vergleichsbeispiel |
| Rezeptur | | | | |
| TPC-Anteil | Gew-% | 85.0 | 85.0 | |
| PET-Anteil | Gew-% | | | 85.0 |
| PMDA-Anteil | Gew-% | 15.0 | 15.0 | 15.0 |

| Maschinenparameter | | | | |
|---|---|---|---|---|
| Temperatur Einzugszone | °C | 200 | 200 | 250 |
| Temperatur Mischzone | °C | 210 | 210 | 250 |
| Temperatur Austragszone | °C | 205 | 205 | 240 |
| Masse-Temperatur | °C | 199 | 204 | 238 |
| Masse-Druck | bar | 34 | 12 | 12 |
| Ankerstrom Extruder | % | 52 | 33 | 43 |
| Durchsatz | kg/h | 20 | 20 | 20 |
| Drehzahl Extruder | UpM | 200 | 200 | 200 |
| Abzugsgeschwindigk. | m/min | 30 | 30 | 30 |

| Vormischung | | | | |
|---|---|---|---|---|
| Schüttdichte | g/dl | 65.4 | 59.7 | 76.5 |

### Schäumung Beispiel 1

96,3 Gew.-% PET-Granulat als Ausgangsmaterial mit einer Grenzviskosität von 0,81 dl/g werden ca. 5 Stunden bei 170 °C mit Trockenluft getrocknet und zusammen mit 2,7 Gew.-% der Vormischung aus Beispiel 1 (ca. 11 Stunden getrocknet mit Trockenluft bei 60°C) und 1,0 % eines Nukleierungsmittels (30 % Talkum in PET; ca. 11 Stunden getrocknet mit Trockenluft bei 60°C) werden in den ersten Extruder einer Extrusionsschäumanlage mit zwei Schneckenextrudern dosiert, aufgeschmolzen, vermischt und mit CO₂ verschäumt. Die Schmelzetemperatur am Austritt aus dem Extrusionswerkzeug beträgt 248°C, der Ausstoss ca. 290 kg/h, die Verweilzeit im Extruder ca. 17 min. Es entstehen kontinuierlich Schaumkörper beispielsweise etwa quaderförmigen Querschnitts, die zu plattenförmigen Schaumkörpern abgelängt werden. Die plattenförmigen Schaumkörper werden gestapelt und an den Berührungsflächen gegenseitig verschweisst, wobei Schaumblöcke entstehen. Die in den Beispielen angegebenen Messwerte werden an Schaumplatten, die quer zur Extrusionsrichtung von den Schaumblöcken abgetrennt werden, ermittelt. Die Viskositätszahl des resultierenden Schaums wird nach ISO 1628/5 bestimmt und beträgt 164.0 ml/g, was einer Grenzviskosität von 1,32 dl/g entspricht.

### Schäumung Beispiel 2

96,3 Gew.-% PET-Granulat mit einer Grenzviskosität von 0,81 dl/g werden ca. 5 Stunden bei 170 °C mit Trockenluft getrocknet und zusammen mit 2,7 Gew.-% der Vormischung aus Beispiel 2 (ca. 11 Stunden getrocknet mit Trockenluft bei 60°C) und 1.0 % eines Nukleierungsmittels (30 % Talkum in PET; ca. 11 Stunden getrocknet mit Trockenluft bei 60°C) werden in den ersten Extruder einer Extrusionsschäumanlage mit zwei Schneckenextrudern dosiert, aufgeschmolzen, vermischt und mit CO₂ verschäumt. Die Schmelzetemperatur am Austritt aus dem Extrusionswerkzeug beträgt 249°C, der Ausstoss ca. 290 kg/h, die Verweilzeit im Extruder ca. 17 min. Die Viskositätszahl des resultierenden Schaums wird nach ISO 1628/5 bestimmt und beträgt 165,6 ml/g, was einer Grenzviskosität von 1,33 dl/g entspricht.

### Schäumung Beispiel 3

86,7 Gew.-% PET-Granulat mit einer Grenzviskosität von 0,81 dl/g werden ca. 5 Stunden bei 170 °C mit Trockenluft getrocknet und zusammen mit 2,3 Gew.-% der Vormischung aus Beispiel 2 (ca. 11 Stunden getrocknet mit Trockenluft bei 60°C), 1,0 % eines Nukleierungsmittels (30 % Talkum in PET; ca. 11 Stunden getrocknet mit Trockenluft bei 60°C) und 10 Gew.-% eines thermoplastischen Copolyesterelastomers (TPC) mit einer Shorehärte von 33 D (ca. 12 Stunden getrocknet mit Trockenluft bei 100°C) werden in den ersten Extruder einer Extrusionsschäumanlage mit zwei Schneckenextrudern dosiert, aufgeschmolzen, vermischt und mit CO₂ verschäumt. Die Schmelzetemperatur am Austritt aus dem Extrusionswerkzeug beträgt 248°C, der Ausstoss ca. 270 kg/h, die Verweilzeit im Extruder ca. 18 min. Die Viskositätszahl des resultierenden Schaums werden nach ISO 1628/5 bestimmt und betragen 162,2 ml/g, was einer Grenzviskosität von 1,30 dl/g entspricht.

### Schäumung Vergleichsbeispiel

96,3 Gew.-% PET-Granulat mit einer Grenzviskosität von 0,81 dl/g werden ca. 5 Stunden bei 170 °C mit Trockenluft getrocknet und zusammen mit 2,7 Gew.-% der Vormischung aus dem Vergleichsbeispiel (ca. 11 Stunden getrocknet mit Trockenluft bei 60°C) und 1,0 % eines Nukleierungsmittels (30 % Talkum in PET; ca. 11 Stunden getrocknet mit Trockenluft bei 60°C) werden in den ersten Extruder einer Extrusionsschäumanlage mit zwei Schneckenextrudern dosiert, aufgeschmolzen, vermischt und mit CO₂ verschäumt. Die Schmelzetemperatur am Austritt aus dem Extrusionswerkzeug beträgt 247°C. Der Ausstoss muss auf ca. 200 kg/h reduziert werden, um den geforderten Offenzelligkeitswert von < 8 % zu realisieren. Die Verweilzeit im Extruder erhöht sich dadurch auf ca. 24 min. Die Viskositätszahl des resultierenden Schaumes nach ISO 1628/5 ist trotz der längeren Verweilzeit mit 157,8 ml/g tiefer als in den Beispielen 1 und 2 und damit auch die korrelierende Grenzviskosität (1,27 dl/g).

Die mechanischen Eigenschaften der erhaltenen Schäume sind in Tabelle 2 aufgeführt.

**Tabelle 2**

| Mechanische Eigenschaften der erhaltenen Schäume | | | | | | |
|---|---|---|---|---|---|---|
| Schäumung | | | Beispiel 1 | Beispiel 2 | Beispiel 3 | Vergleichsbeispiel |
| Rohdichte | kg/m³ | ISO 845 | 121.3 | 120.5 | 122.2 | 121.8 |
| Druckfestigkeit | N/mm² | ISO 844 | 1.79 | 1.75 | 1.59 | 1.81 |
| E-Modul (Druckmodul) senkrecht | N/mm² | DIN 53421 | 102.4 | 97.2 | 97.6 | 106.9 |
| Schubfestigkeit | N/mm² | ISO 1922 | 1.11 | 1.08 | 1.32 | 1.07 |
| G-Modul (Schubmodul) | N/mm² | ASTM C393 | 23.6 | 22.4 | 19.8 | 23.8 |
| Schubbruchdehnung | % | ISO 1922 | 16.0 | 15.8 | 73.3 | 8.0 |
| Offenzelligkeit | Vol-% | AM-019 | 3.0 | 3.4 | 3.2 | 5.2 |
| Water Absorption Test | Gew-% | ASTM D1056 | 27.2 | 29.9 | 28.9 | 45.1 |

## Patentansprüche

1. Schaumkörper aus thermoplastischen Polyestern, mit hoher Homogenität, niedriger Offenzeiligkeit und hoher Schubbruchdehnung, enthalten als Modifizierungsmittel Dianhydride von Tetracarbonsäuren,
**dadurch gekennzeichnet, dass**
der Polyesterschaum wenigstens ein thermoplastisches Elastomer der Untergruppen thermoplastische Styrolelastomere, thermoplastsche Kautschukvulkanisate, thermoplastische Urethanelastomere, thermoplastische Polyamidelastomere, thermoplastische Copolyesterelastomere und nicht klassierte thermoplastische Elastomere enthält.

2. Schaumkörper aus Polyestern nach Anspruch 1, **dadurch gekennzeichnet, dass** die thermoplastischen Elastomere in Mengen von 0,5 bis 15 Gew.-%, bezogen auf das Gewicht des Schaumkörpers, enthalten sind.

3. Schaumkörper aus Polyestern nach wenigstens einem der Ansprüche 1 oder 2, **dadurch gekennzeichnet, dass** als thermoplastische Elastomere im Polyesterschaum thermoplastische Copolyesterelastomere enthalten sind.

4. Schaumkörper aus Polyestern nach Anspruch 3, **dadurch gekennzeichnet, dass** die thermoplastischen Copolyesterelastomere in Mengen von 0,5 bis 15 Gew.%, bezogen auf das Gewicht des Schaumkörpers, enthalten sind.

5. Schaumkörper aus Polyestern nach wenigstens einem der Ansprüche 3 oder 4, **dadurch gekennzeichnet, dass** die thermoplastischen Copolyesterelastomere Polyesterblöcke enthalten, wobei die Polyesterblöcke aus einem Diol, vorzugsweise aus 1,4-Butandiol oder 1,2-Ethandiol, und einer Dicarbonsäure, vorzugsweise aus Terephthalsäure, die mit Polyethern, die Hydroxyl-Endgruppen tragen und in einer Kondensationsreaktion verestert werden, sind.

6. Schaumkörper aus Polyestern nach wenigstens einem der Ansprüche 1 bis 5, **dadurch gekennzeichnet, dass** der Polyesterschaum eine Offenzelligkeit nach Airex-Methode AM-19 in Anlehnung an ASTM D1056-07 von kleiner als 8% und insbesondere von kleiner als 4% aufweist.

7. Schaumkörper aus Polyestern nach wenigstens einem der Ansprüche 1 bis 6, **dadurch gekennzeichnet, dass** der Polyesterschaum eine Schubbruchdehnung nach ISO 1922 von mehr als 12 %, zweckmässig von mehr als 16 % und bevorzugt von mehr als 50 % aufweist.

8. Verfahren zur Herstellung von Schaumkörpern aus thermoplastischen Polyestern, mit hoher Homogenität, niedriger Offenzelligkeit und hoher Schubbruchdehnung, enthaltend als Modifizierungsmittel Dianhydride von Tetracarbonsäuren,
**dadurch gekennzeichnet, dass**
ein Polyester mit einer Vormischung mit wenigstens einem thermoplastischen Elastomer der Untergruppen thermoplastische Styrolelastomere, thermoplastsche Kautschukvulkanisate, thermoplastische Urethanelastomere, thermoplastische Polyamidelastomere, thermoplastische Copolyesterelastomere und nicht klassierte thermoplastische Elastomere, und Dianhydriden von Tetracarbonsäuren versetzt, vermischt und zu einem Schaumkörper, enthaltend die thermoplastischen Elastomere oder thermoplastischen Copolyesterelastomere in Mengen von 0,5 bis 15 Gew.-%, bezogen auf das Gewicht des Schaumkörpers, aufgeschäumt wird.

9. Verfahren zur Herstellung von Schaumkörpern aus Polyestern nach Anspruch 8, **dadurch gekennzeichnet, dass** der Polyester mit der Vormischung aus thermoplastischen Copolyesterelastomeren und Dianhydriden von Tetracarbonsäuren als Komponenten einem Reaktor oder Mischer, insbesondere einem Ein- oder Doppelschneckenextruder oder einem Mehrwellenextruder oder einer Tandemanlage aus zwei miteinander kombinierten Einschneckenextrudern oder aus einem Doppel- und einem Einschneckenextruder, zugeführt und darin vermischt werden

10. Mittel zur Erzeugung von Schaumkörpern aus Polyestern, mit hoher Homogenität, niedriger Offenzelligkeit und hoher Schubbruchdehnung, enthaltend als Modifizierungsmittel Dianhydride von Tetracarbonsäuren, **dadurch gekennzeichnet, dass** das Mittel eine Vormischung, enthaltend wenigstens ein thermoplastisches Elastomer der Untergruppen thermoplastische Styrolelastomere, thermoplastsche Kautschukvulkanisate, thermoplastische Urethanelastomere, thermoplastische Polyamidelastomere, thermoplastische Copolyesterelastomere und nicht klassierte thermoplastische Elastomere, und vorzugsweise thermoplastische Copolyesterelastomere, in Mengen von 25 bis 95 Gew.-%, bezogen auf das Gewicht des Mittels, und Dianhydride von Tetracarbonsäuren in Mengen von 5 bis 30 Gew.%, bezogen auf das Gewicht des Mittels, darstellt.

11. Mittel zur Erzeugung von Schaumkörpern aus Polyestern gemäss Anspruch 10, **dadurch gekennzeichnet, dass** das Mittel eine Vormischung darstellt, enthaltend thermoplastische Copolyesterelastomere in Mengen von 50 bis 90 Gew.%, zweckmässig von 80 bis 90 Gew.-%, und Dianhydride von Tetracarbonsäuren in Mengen von 10 bis 25 Gew-%, zweckmässig von 10 bis 15 Gew.-%, bezogen auf das Gewicht des Mittels.

12. Mittel zur Erzeugung von Schaumkörpern aus Polyestern gemäss wenigstens einem der Ansprüche 10 oder 11, **dadurch gekennzeichnet, dass** das Mittel eine Vormischung darstellt, enthaltend 0 bis 70%, vorzugsweise 1 bis 50 Gew.-%, jeweils bezogen auf das Gewicht des Mittels, Stabilisatoren, Nukleierungsmittel, Flammschutzmittel und/oder Polyester, zweckmässig ein Polyester der gleichen Qualität, wie ein zu modifizierender Ausgangspolyester.

## Claims

1. Foam body made of thermoplastic polyesters, having a high homogeneity, a low open-cell factors and a high shear fracture extension, comprising dianhydrides of tetracarboxylic acids as modifying agents, **characterised in that** the polyester foam comprises at least one thermoplastic elastomer from the subgroups of thermoplastic styrene elastomers, thermoplastic rubber vulcanisates, thermoplastic urethane elastomers, thermoplastic polyamide elastomers, thermoplastic copolyester elastomers and unclassified thermoplastic elastomers.

2. Foam body made of polyesters according to claim 1, **characterised in that** the thermoplastic elastomers are comprised in quantities of 0.5 to 15 % by weight based on the weight of the foam body.

3. Foam body made of polyesters according to at least one of claims 1 and 2, **characterised in that** thermoplastic copolyester elastomers are comprised in the polyester foam as the thermoplastic elastomers.

4. Foam body made of polyesters according to claim 3, **characterised in that** the thermoplastic copolyester elastomers are comprised in quantities of 0.5 to 15 % by weight based on the weight of the foam body.

5. Foam body made of polyesters according to at least one of claims 3 and 4, **characterised in that** the thermoplastic copolyester elastomers comprise polyester blocks, the polyester blocks consisting of a diol, preferably 1,4-butanediol or 1,2-ethanediol, and a dicarboxylic acid, preferably terephthalic acid, which have been esterified with polyethers carrying hydroxyl terminal groups in a condensation reaction.

6. Foam body made of polyesters according to at least one of claims 1 to 5, **characterised in that** the polyester foam has a open-cell factor in accordance with Airex method AM-19 based on ASTM D1056-07 of less than 8 % and in particular of less than 4 %.

7. Foam body made of polyesters according to at least one of claims 1 to 6, **characterised in that** the polyester foam has a shear fracture extension in accordance with ISO 1922 of more than 12 %, expediently of more than 16 % and preferably of more than 50 %.

8. Method for manufacturing foam bodies made of thermoplastic polyesters having a high homogeneity, a low open-cell factor and a high shear fracture extension, comprising dianhydrides of a tetracarboxylic acid as modifying agents, **characterised in that** a polyester is mixed with a premix having at least one thermoplastic elastomer from the subgroups of thermoplastic styrene elastomers, thermoplastic rubber vulcanisates, thermoplastic urethane elastomers, thermoplastic polyamide elastomers, thermoplastic copolyester elastomers and unclassified thermoplastic elastomers, and with dianhydrides of tetracarboxylic acids, mixed, and foamed to form a foam body comprising the thermoplastic elastomers or thermoplastic copolyester elastomers in quantities of 0.5 to 15 % by weight based on the weight of the foam body.

9. Method for manufacturing foam bodies made of polyesters according to claim 8, **characterised in that** the polyester is supplied, together with the premix of thermoplastic copolyester elastomers and dianhydrides of tetracarboxylic acids as components, to a reactor or mixer, for example a single-screw or double-screw extruder or a multi-shaft extruder or a tandem system consisting of two single-screw extruders combined with one another or of a double-screw and a single-screw extruder, and mixed therein.

10. Agent for producing foam bodies made of polyesters having a high homogeneity, a low open-cell factor and a high shear fracture extension, comprising dianhydrides of tetracarboxylic acids as modifying agents, **characterised in that** the agent is a premix comprising at least one thermoplastic elastomer from the subgroups of thermoplastic styrene elastomers, thermoplastic rubber vulcanisates, thermoplastic urethane elastomers, thermoplastic polyamide elastomers, thermoplastic copolyester elastomers and unclassified thermoplastic elastomers, and preferably thermoplastic copolyester elastomers, in quantities of 25 to 95 % by weight based on the weight of the agent and dianhydrides of tetracarboxylic acids in quantities of 5 to 30 % by weight based on the weight of the agent.

11. Agent for producing foam bodies made of polyesters according to claim 10, **characterised in that** the agent is a premix comprising thermoplastic copolyester elastomers in quantities of 50 to 90 % by weight, expediently of 80 to 90 % by weight, and dianhydrides of tetracarboxylic acids in quantities of 10 to 25 % by weight, expediently of 10 to 15 % by weight, based on the weight of the agent.

12. Agent for producing foam bodies made of polyesters according to at least one of claims 10 and 11, **characterised in that** the agent is a premix comprising 0 to 70 %, preferably 1 to 50 % by weight, in each case based on the weight of the agent, of stabilisers, nucleating agents, flame retardants and/or polyester, expediently a polyester of the same quality as a starting polyester which is to be modified.

## Revendications

1. Corps expansés constitués de polyesters thermoplastiques, avec une homogénéité élevée, une faible ouverture d'alvéoles et un allongement à la rupture de cisaillement élevé, contenant comme agent de modification des dianhydrides d'acides tétracarboxyliques,
**caractérisé en ce que**
la mousse de polyester contient au moins un élastomère thermoplastique des sous-groupes d'élastomères de styrènes thermoplastiques, de vulcanisats de caoutchoucs thermoplastiques, d'élastomères d'uréthanes thermoplastiques, d'élastomères de polyamides thermoplastiques, d'élastomères de copolyesters thermoplastiques et d'élastomères thermoplastiques non classifiés.

2. Corps expansés constitués de polyesters selon la revendication 1, **caractérisé en ce que** les élastomères thermoplastiques sont contenus dans des quantités de 0,5 à 15 % en masse, rapporté à la masse du corps expansé.

3. Corps expansés constitués de polyesters selon au moins l'une des revendications 1 ou 2, **caractérisé en ce que** des élastomères de copolyesters thermoplastiques sont contenus comme élastomères thermoplastiques dans la mousse de polyester.

4. Corps expansés constitués de polyesters selon la revendication 3, **caractérisé en ce que** les élastomères de copolyesters thermoplastiques sont contenus dans des quantités de 0,5 à 15 % en masse, rapporté à la masse du corps expansé.

5. Corps expansés constitués de polyesters selon au moins l'une des revendications 3 ou 4, **caractérisé en ce que** les élastomères de copolyesters thermoplastiques contiennent des séquences polyesters, les séquences polyesters constituées d'un diol, de préférence de 1,4-butanediol ou de 1,2-éthanediol, et d'un acide dicarboxylique, de préférence d'acide téréphtalique, étant présents avec des polyéthers, qui portent des groupes terminaux hydroxyle et qui sont estérifiés dans une réaction de condensation.

6. Corps expansés constitués de polyesters selon au moins l'une des revendications 1 à 5, **caractérisé en ce que** la mousse de polyester présente une ouverture d'alvéoles selon le procédé Airex AM-19 conformément à ASTM D1056-07 inférieure à 8 % et en particulier inférieure à 4%.

7. Corps expansés constitués de polyesters selon au moins l'une des revendications 1 à 6, **caractérisé en ce que** la mousse de polyester présente un allongement à la rupture de cisaillement selon ISO 1922 supérieur à 12 %, de préférence supérieur à 16 % et encore mieux supérieur à 50 %.

8. Procédé pour la préparation de corps expansés constitués de polyesters thermoplastiques, avec une homogénéité élevée, une faible ouverture d'alvéoles et un allongement à la rupture de cisaillement élevé, contenant comme agent de modification des dianhydrides d'acides tétracarboxyliques,
**caractérisé en ce que**
un polyester est mélangé avec un prémélange avec au moins un élastomère thermoplastique du sous-groupe d'élastomères de styrènes thermoplastiques, de vulcanisats de caoutchoucs thermoplastiques, d'élastomères d'uréthanes thermoplastiques, d'élastomères de polyamides thermoplastiques, d'élastomères de copolyesters thermoplastiques et d'élastomères thermoplastiques non classifiés, et des dianhydrides d'acides tétracarboxyliques, et est expansé en un corps expansé contenant les élastomères thermoplastiques ou les élastomères de copolyesters thermoplastiques dans des quantités de 0,5 à 15 % en masse, rapporté à la masse du corps expansé.

9. Procédé pour la préparation de corps expansés constitués de polyesters selon la revendication 8, **caractérisé en ce que** le polyester est introduit avec le prémélange constitué d'élastomères de copolyesters thermoplastiques et de dianhydrides d'acides tétracarboxyliques comme constituants dans un réacteur ou un mélangeur, en particulier dans une extrudeuse à vis unique ou à vis double ou dans une extrudeuse à plusieurs arbres ou dans un dispositif tandem constitué de deux extrudeuses à vis unique combinées ensemble ou d'une extrudeuse à vis double et d'une extrudeuse à vis unique et y sont mélangés.

10. Moyen pour la production de corps expansés constitués de polyesters, avec une homogénéité élevée, une faible ouverture d'alvéoles et un allongement à la rupture de cisaillement élevé, contenant comme agent de modification des dianhydrides d'acides tétracarboxyliques, **caractérisé en ce que** le moyen représente un prémélange, contenant au moins un élastomère thermoplastique des sous-groupes d'élastomères de styrènes thermoplastiques, de vulcanisats de caoutchoucs thermoplastiques, d'élastomères d'uréthanes thermoplastiques, d'élastomères de polyamides thermoplastiques, d'élastomères de copolyesters thermoplastiques et d'élastomères thermoplastiques non classifiés, et de préférence d'élastomères de copolyesters thermoplastiques, dans des quantités de 25 à 95 % en masse, rapporté à la masse du moyen, et des dianhydrides d'acides tétracarboxyliques dans des quantités de 5 à 30 % en masse, rapporté à la masse du moyen.

11. Moyen pour la production de corps expansés constitués de polyesters selon la revendication 10, **caractérisé en ce que** le moyen représente un prémélange, contenant des élastomères de copolyesters thermoplastiques dans des quantités de 50 à 90 % en masse, de préférence de 80 à 90 % en masse, et des dianhydrides d'acides tétracarboxyliques dans des quantités de 10 à 25 % en masse, de préférence de 10 à 15 % en masse, rapporté à la masse du moyen.

12. Moyen pour la production de corps expansés constitués de polyesters selon au moins l'une des revendications 10 ou 11, **caractérisé en ce que** le moyen représente un prémélange, contenant de 0 à 70 %, de préférence de 1 à 50 % en masse, à chaque fois rapporté à la masse du moyen, de stabilisateurs, d'agents de nucléation, d'agents ignifuges et/ou de polyester, de préférence un polyester de la même qualité, comme un polyester de départ à modifier.
